# FASCICULE DE BREVET EUROPEEN

(11) **EP 3 490 368 B1**
(45) Date de publication et mention de la délivrance du brevet: **02.09.2020**
(21) Numéro de dépôt: 17749647.8
(22) Date de dépôt: 25.07.2017
(51) Int. Cl.: A01K 1/12

(54) **INSTALLATION DE TRAITE AVEC LISSE AVANT MONTANTE ET BASCULANTE**
MELKANLAGE MIT HUB- UND KIPPFRONTBÜGEL
MILKING INSTALLATION WITH LIFTING AND TILTING FRONT RAIL

(30) Priorité: 26.07.2016 FR 1657147
(43) Date de publication de la demande: 05.06.2019
(73) Titulaire: Etablissements Binet, 50160 Guilberville (FR); Boumatic Gascoigne Melotte, 4350 Remicourt (BE)
(72) Inventeur: BEAUSIRE, Fabrice, 50160 Guilberville (FR); BARBIER, Matthieu, 50160 Guilberville (FR)
(74) Mandataire: Cabinet Le Guen Maillet
(86) Numéro de dépôt international: PCT/EP2017/068743
(87) Numéro de publication internationale: WO 2018/019819

(56) Documents cités:
- BE-A5- 1 014 421
- BE-A6- 1 014 550
- FR-A1- 2 730 128
- GB-A- 2 386 815
- US-A1- 2001 047 765

## Description

La présente invention concerne une installation de traite comportant des stalles de contention qui sont délimitées par des portillons de séparation montés sur un coulisseau mobile verticalement, ainsi qu'un procédé de manœuvre d'une telle installation de traite.

Une installation de traite comprend classiquement un ensemble de stalles de contention, chacune étant destinée à maintenir un animal durant la traite. Une telle installation de traite comprend des portillons de séparation où chaque portillon de séparation est monté sur un poteau fixé au sol et mobile autour d'un axe vertical pour permettre le placement de l'animal avant la traite. La même installation de traite comprend également une lisse avant au niveau de laquelle se positionne la tête de l'animal durant la traite. La lisse avant est également fixée au sol par des poteaux.

Lorsque la traite des animaux est terminée, la lisse avant se soulève verticalement pour laisser passer les animaux. Même si une telle installation de traite donne satisfaction, elle peut être améliorée entre autres pour faciliter l'évacuation des animaux.

Les documents GB-A-2 386 815, BE-A-1 014 550, FR-A-2 730 128, US-A-2001/047765 et BE-A-1 014 421 divulguent des installations de traite avec des lisses mobiles.

Un objet de la présente invention est de proposer une installation de traite dont le fonctionnement facilite l'évacuation des animaux après la traite.

A cet effet, est proposée une installation de traite pour animaux selon la revendication 1 comportant :
- une pluralité de poteaux plantés verticalement dans le sol et où entre deux poteaux voisins est agencée une pluralité de stalles de contention, chacune présentant un axe aligné avec l'axe longitudinal de l'animal lorsqu'il est dans la stalle de contention,
- pour chaque poteau, un coulisseau monté mobile en translation verticalement le long du poteau entre une position basse et une position haute, et un premier moyen d'entraînement prévu pour assurer le déplacement du coulisseau,
- pour chaque coulisseau, un bras basculant monté mobile en rotation sur le coulisseau entre une position abaissée et une position relevée, et un deuxième moyen d'entraînement prévu pour assurer le déplacement du bras basculant,
- pour chaque paire de bras basculants voisins, une poutre fixée aux deux bras basculants,
- sous chaque poutre, une pluralité de poutrelles fixées et suspendues sous la poutre,
- pour chaque poutrelle, un guide latéral porté par la poutrelle et positionné entre deux animaux voisins pour séparer leurs têtes, et
- une unité de contrôle prévue pour commander chaque moyen d'entraînement.

Avantageusement, l'installation de traite comporte, pour chaque poutrelle, un portillon de séparation monté mobile en rotation sur la poutrelle entre une position de fermeture dans laquelle le portillon de séparation est en travers de la stalle de contention et une position de séparation dans laquelle le portillon de séparation se positionne parallèlement à l'axe des stalles de contention.

Avantageusement, l'installation de traite comporte pour chaque poteau, une potence fixée audit poteau et s'étendant vers l'arrière des stalles de contention, et un pare-bouse fixé à chaque potence au niveau de l'arrière des stalles de contention.

L'invention propose également un procédé de manœuvre pour une installation de traite selon l'une des variantes précédentes et comportant :
- une étape de traite au cours de laquelle les animaux sont traits,
- une étape de levage au cours de laquelle l'unité de contrôle commande chaque premier moyen d'entraînement de manière à faire passer chaque coulisseau de sa position basse à sa position haute,
- une première étape de basculement au cours de laquelle l'unité de contrôle commande chaque deuxième moyen d'entraînement de manière à faire basculer chaque bras basculant de sa position abaissée à sa position relevée,
- une étape de descente au cours de laquelle l'unité de contrôle commande chaque premier moyen d'entraînement de manière à faire passer chaque coulisseau de sa position haute à sa position basse,
- une deuxième étape de basculement au cours de laquelle l'unité de contrôle commande chaque deuxième moyen d'entraînement de manière à faire basculer chaque bras basculant de sa position relevée à sa position abaissée.

Avantageusement, le procédé de manœuvre comporte préalablement à l'étape de traite, une étape de contrainte au cours de laquelle, l'unité de contrôle commande chaque deuxième moyen d'entraînement de manière à faire basculer chaque bras basculant de sa position abaissée à une position intermédiaire entre la position abaissée et la position relevée, et entre l'étape de traite et l'étape de levage, une étape de relâchement au cours de laquelle, l'unité de contrôle commande chaque deuxième moyen d'entraînement de manière à faire basculer chaque bras basculant de sa position intermédiaire à sa position abaissée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- les Figs. 1 à 7 sont des vues en perspective d'une installation de traite selon l'invention dans différentes positions de fonctionnement,
- la Fig. 8 est une représentation schématique d'une unité de contrôle pour une installation de traite selon l'invention, et
- la Fig. 9 est un organigramme d'un procédé de manœuvre selon l'invention.

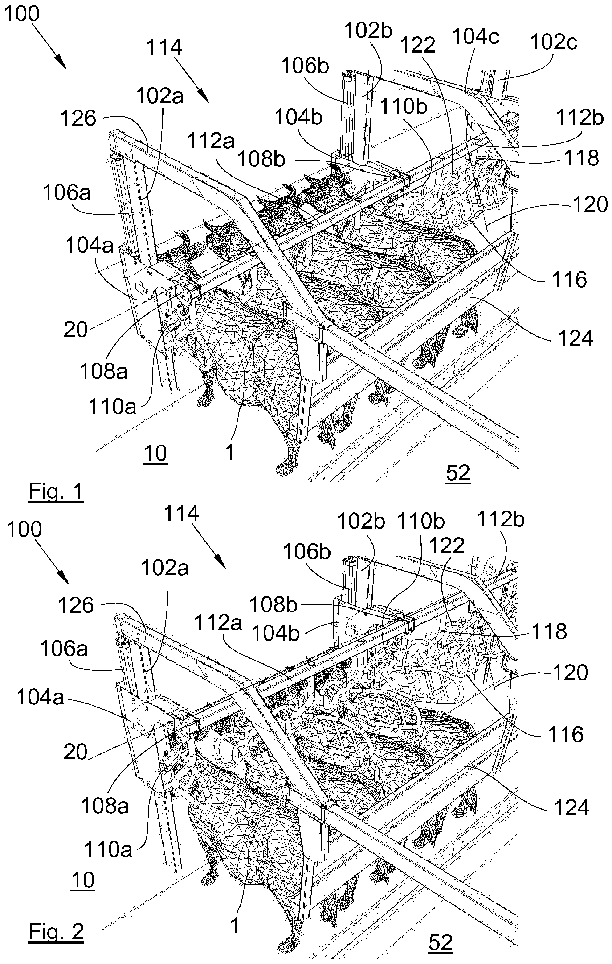

Dans la description qui suit, les termes relatifs à une position sont pris en référence à une installation de traite en fonctionnement, c'est-à-dire comme elle est représentée sur les Figs. 1 à 7.

Les Figs. 1 à 7 montrent une installation de traite 100 qui comporte une pluralité de poteaux 102a-c qui sont plantés verticalement dans le sol 10. L'installation de traite 100 est décrite comme une installation de traite pour vaches 1, mais il est possible de l'adapter à tout animal devant être trait. Deux poteaux 102a-c voisins définissent entre eux un tronçon et une direction d'alignement. Dans le mode de réalisation de l'invention présenté sur les Figs. 1 à 7, tous les poteaux 102a-c sont alignés selon une même direction d'alignement, mais il est possible que les directions d'alignement changent pour deux tronçons consécutifs.

L'installation de traite 100 est prévue pour permettre l'entrée des vaches 1 en marche avant et la sortie également en marche avant ce qui facilite le déplacement des vaches 1. L'installation de traite 100 représentée sur les figures est également prévue pour permettre la traite par l'arrière de la vache 1, et à cette fin, le sol 10 sur lequel repose l'installation de traite 100 est surélevé par rapport à un couloir 52 dans lequel un éleveur se place pour positionner les gobelets trayeurs sur les trayons de la vache 1.

Afin de réaliser la traite, l'installation de traite 100 comporte classiquement un système de traite comportant entre autres une machine à traire classique avec des pots trayeurs.

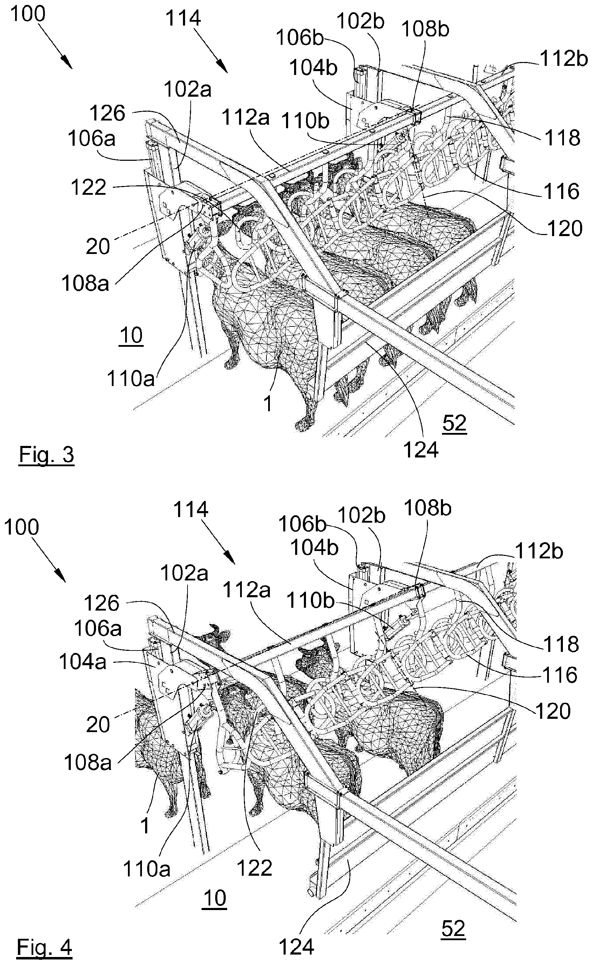

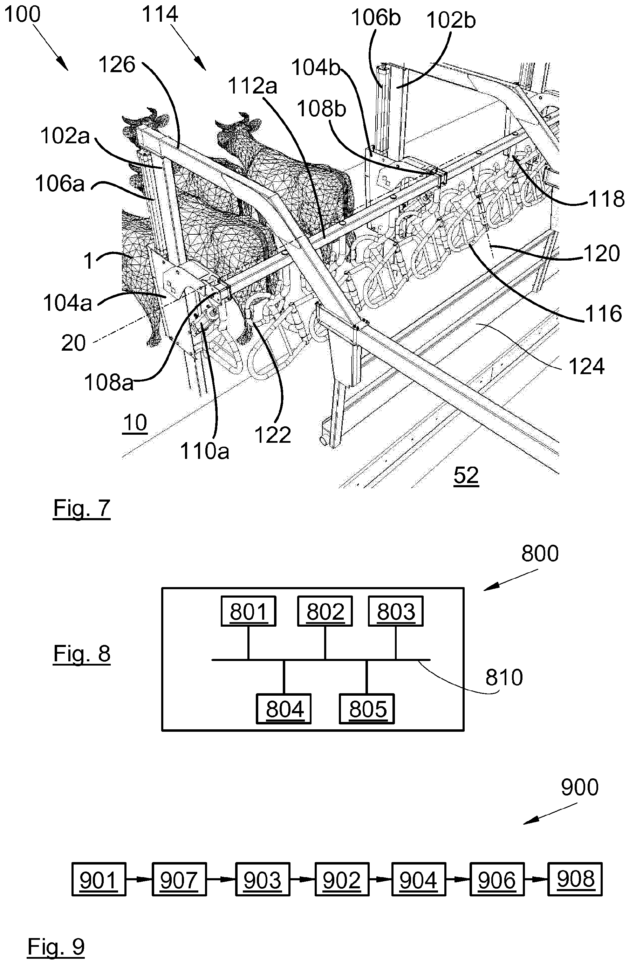

Chaque poteau 102a-c porte un coulisseau 104a-c qui est monté mobile en translation verticalement le long du poteau 102a-c entre une position basse (Figs. 1 et 7) et une position haute (Fig. 4).

L'installation de traite 100 comporte pour chaque coulisseau 104a-c, un premier moyen d'entraînement prévu pour assurer le déplacement du coulisseau 104a-c de la position haute à la position basse et inversement.

Dans le mode de réalisation de l'invention présenté ici, le premier moyen d'entraînement est un premier vérin 106a-b fixé entre le poteau 102a-c et le coulisseau 104a-c. Selon l'implantation du premier vérin 106a-b, la montée du coulisseau 104a-c correspond à l'allongement ou à la rétractation du piston du premier vérin 106a-b, et respectivement la descente du coulisseau 104a-c correspond à la rétractation ou à l'allongement du piston du premier vérin 106a-b.

L'installation de traite 100 comporte pour chaque coulisseau 104a-c, un bras basculant 108a-b monté mobile en rotation sur le coulisseau 104a-c entre une position abaissée (Figs. 1-3 et 7) et une position relevée (Figs. 4-6) autour d'un axe de basculement 20 qui est ici horizontal et qui est dans le mode de réalisation de l'invention parallèle à la direction d'alignement des poteaux 102a-c du tronçon correspondant. La position relevée étant plus haute que la position abaissée.

L'installation de traite 100 comporte pour chaque bras basculant 108a-b, un deuxième moyen d'entraînement prévu pour assurer le déplacement du bras basculant 108a-b. Dans le mode de réalisation de l'invention présenté ici, le deuxième moyen d'entraînement est un deuxième vérin 110a-b fixé entre le coulisseau 104a-c et le bras basculant 108a-b. Dans le cas de l'implantation du deuxième vérin 110a-b présentée sur les Figs. 1 à 7, le passage vers la position relevée correspond à l'allongement du piston du deuxième vérin 110a-b, et le passage vers la position abaissée correspond à la rétractation du piston du deuxième vérin 110a-b. Une implantation inversée est également possible.

Entre deux bras basculants 108a-b voisins, l'installation de traite 100 comporte une poutre 112a-b fixée aux deux bras basculants 108a-b permettant à la poutre de suivre les mouvements des deux bras basculants 108a-b.

Entre deux poteaux 102a-c voisins, l'installation de traite 100 est prévue pour permettre la contention de plusieurs vaches 1 (ici 4 vaches). Ainsi, entre deux poteaux 102a-c voisins est agencée une pluralité de stalles de contention 114, chacune permettant le maintien d'une vache 1 et présentant un axe aligné avec l'axe longitudinal de la vache 1 lorsqu'elle est dans la stalle de contention 114. Dans le mode de réalisation de l'invention présenté sur les figures, l'axe de chaque stalle de contention 114 présente un angle de 90° par rapport à la direction d'alignement pour permettre la traite par l'arrière.

Pour séparer les têtes de deux vaches 1 voisines, l'installation de traite 100 comporte entre deux stalles de contention 114 voisines un guide latéral 122 qui se positionne entre les deux vaches 1 voisines. A cette fin, l'installation de traite 100 comporte, pour chaque guide latéral 122, une poutrelle 118 qui est fixée et suspendue sous la poutre 112a-b et qui porte le guide latéral 122. Chaque poutre 112a-b soutient ainsi une pluralité de poutrelles 118.

L'installation de traite 100 ainsi décrite repose donc sur le sol 10 uniquement par les poteaux 102a-c ce qui limite les éléments au sol pouvant être gênants lors du lavage du sol 10 et le mouvement du guide latéral 122 tel qu'il est décrit ci-après facilite l'évacuation des vaches 1 en les poussant vers l'avant après la traite.

Dans le mode de réalisation de l'invention présenté ici, chaque stalle de contention 114 est séparée de la stalle de contention 114 voisine par un portillon de séparation 116 qui se place entre les flancs de deux vaches 1 voisines. A cette fin, chaque poutrelle 118 porte un portillon de séparation 116.

Chaque portillon de séparation 116 est mobile en rotation sur la poutrelle 118 autour d'un axe de séparation 120 qui est sensiblement vertical lorsque le portillon de séparation 116 est en position entre les flancs de deux vaches 1 voisines et plus particulièrement lorsque les coulisseaux 104a-c sont en position basse et les bras basculants 108a-b sont en position abaissée. Chaque portillon de séparation 116 est ainsi mobile entre une position de fermeture (Figs. 3 à 7) dans laquelle le portillon de séparation 116 est en travers de la stalle de contention 114 empêchant l'accès d'une vache 1 dans la stalle de contention 114, et une position de séparation (Figs. 1 et 2) dans laquelle le portillon de séparation 116 se positionne parallèlement à l'axe des stalles de contention 114 pour séparer deux vaches 1 voisines.

Chaque portillon de séparation 116 est contraint en position de fermeture. Cette contrainte s'effectue par exemple à l'aide d'un ressort de rappel ou par le fait que l'axe de séparation 120 n'est pas vertical et que le portillon de séparation 116 présente un déséquilibre pondéral autour de cet axe de séparation 120.

Pour protéger l'éleveur durant la traite, l'installation de traite 100 comporte également un pare-bouse 124 disposé à l'arrière de l'arrière-train des vaches 1. Afin d'assurer la fixation du pare-bouse 124, une potence 126 est fixée à chaque poteau 102a-c et chaque potence 126 s'étend vers l'arrière des vaches 1, c'est à dire vers l'arrière des stalles de contention 114. Le pare-bouse 124 est alors fixé à chaque potence 126 au niveau de l'arrière-train des vaches 1, c'est à dire au niveau de l'arrière des stalles de contention 114.

L'installation de traite 100 comporte également une unité de contrôle 800 prévue pour commander chaque moyen d'entraînement 106a-b, 110a-b afin de manœuvrer chacun des éléments mobiles de l'installation de traite 100. L'unité de contrôle 800 est en particulier réalisée à l'aide d'un automate.

La Fig. 8 montre l'unité de contrôle 800 qui comporte, reliés par un bus de communication 810: un processeur 801 ou CPU («Central Processing Unit» en anglais) ; une mémoire vive RAM 802 (« Random Access Memory » en anglais) ; une mémoire morte ROM 803 (« Read Only Memory » en anglais) ; une unité de stockage telle qu'un disque dur ou un lecteur de support de stockage, tel qu'un lecteur de cartes SD 804 (« Secure Digital » en anglais) ; au moins une interface de communication 805, permettant par exemple à l'unité de contrôle 800 de communiquer avec les moyens d'entraînement 106a-b et 110a-b.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits en relation avec la Fig. 9.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 9 montre un organigramme 900 d'un procédé de manœuvre de l'installation de traite 100 lorsque des vaches 1 sont présentes (Fig. 1) dans l'installation de traite 100.

Le procédé de manœuvre comporte alors :
- une étape de traite 907 au cours de laquelle les vaches 1 sont traites,
- une étape de levage 902 au cours de laquelle l'unité de contrôle 800 commande chaque premier moyen d'entraînement 106a-b de manière à faire passer chaque coulisseau 104a-c de sa position basse (Fig. 1) à sa position haute (Fig. 4),
- une première étape de basculement 904 au cours de laquelle l'unité de contrôle 800 commande chaque deuxième moyen d'entraînement 110a-b de manière à faire basculer chaque bras basculant 108a-b de sa position abaissée à sa position relevée (Fig. 4),
- une étape de descente 906 au cours de laquelle l'unité de contrôle 800 commande chaque premier moyen d'entraînement 106a-b de manière à faire passer chaque coulisseau 104a-c de sa position haute (Fig. 4) à sa position basse (Fig. 7),
- une deuxième étape de basculement 908 au cours de laquelle l'unité de contrôle 800 commande chaque deuxième moyen d'entraînement 110a-b de manière à faire basculer chaque bras basculant 108a-b de sa position relevée à sa position abaissée (Fig. 7).

L'étape de levage 902 s'effectue lorsque l'étape de traite 907 est terminée.

Afin de réduire le temps de cycle, il est possible de prévoir que certaines étapes se chevauchent. Par exemple, il est possible de prévoir que l'étape de descente 906 et la deuxième étape de basculement 908 se chevauchent.

A la fin de l'étape de levage 902, lorsqu'ils sont présents, les portillons de séparation 116 ne sont plus maintenus par les vaches 1, ils reviennent donc en position de fermeture.

A la fin de la deuxième étape de basculement 908, l'installation de traite 100 est prête à recevoir de nouvelles vaches 1 qui pénètrent alors les unes à la suite des autres par une des extrémités de l'installation de traite 100 (ici l'extrémité gauche).

Lorsqu'il n'y a pas de portillon de séparation 116, la première vache 1 va jusqu'au fond de l'installation de traite 1 et s'installe dans la première stalle de contention 114 (ici à droite), la vache 1 suivante se positionne contre la première et ainsi de suite.

Lorsqu'il y a des portillons de séparation 116, et comme les portillons de séparation 116 sont tous en position de fermeture, la première vache 1 va jusqu'au fond de l'installation de traite 1 et s'installe dans la première stalle de contention 114 (ici à droite) qui ne comporte pas de portillon de séparation 116 en aval. En faisant cela, elle fait basculer le portillon de séparation 116, juste en amont de sa place, vers la position de séparation, empêchant ainsi la vache 1 suivante d'avancer jusqu'à la stalle de contention 114 déjà occupée et libérant la stalle de contention 114 voisine juste en amont.

Le remplissage de l'installation de traite 100 s'effectue ainsi de suite jusqu'à la dernière stalle de contention 114 libre (ici celle de gauche).

A la fin de l'étape de levage 902, l'espace devant les vaches 1 est libéré ce qui permet aux vaches 1 de sortir des stalles de contention 114.

L'étape de descente 906 permet de contraindre une première fois les vaches 1 qui auraient pu stationner dans les stalles de contention 114 à sortir.

La première étape de basculement 904 permet d'incliner chaque guide latéral 122 et chaque portillon de séparation 116 lorsqu'il y en a un, vers l'arrière (Figs. 4 à 6) ce qui permet lors de la deuxième étape de basculement 908 d'aller chercher, avec le guide latéral 122, et éventuellement le portillon de séparation 116, vers l'arrière de la vache 1 qui aurait malgré tout continué à stationner dans la stalle de contention 114 en la poussant vers l'avant.

Les Figs. 2 et 3 représentent des positions intermédiaires prises par les coulisseaux 104a-c lors de l'étape de levage 902.

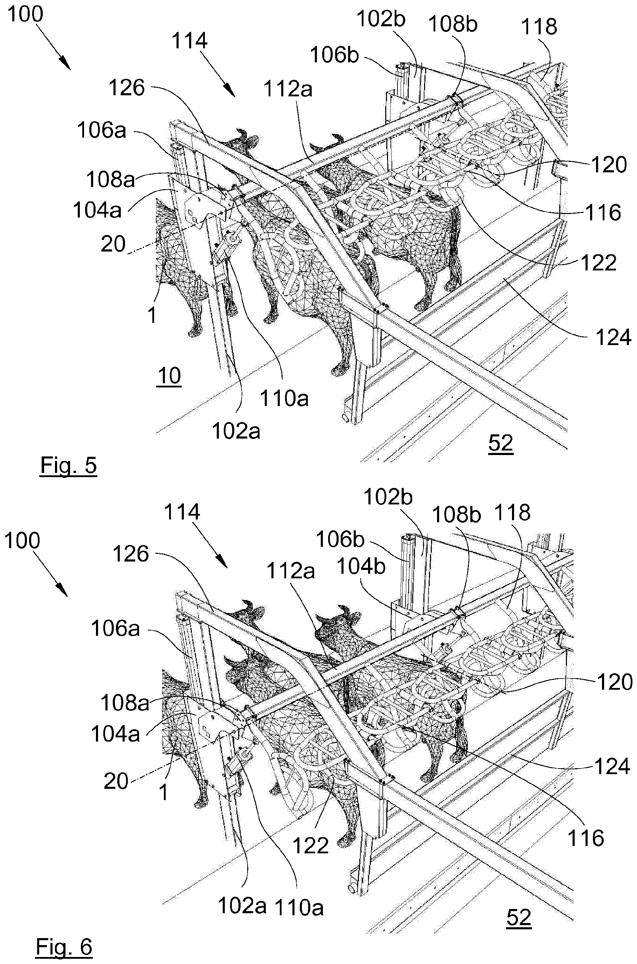

Les Figs. 5 et 6 représentent des positions intermédiaires prises par les coulisseaux 104a-c lors de l'étape de descente 906.

Dans la mesure où les vaches 1 peuvent avoir des tailles différentes d'un élevage à un autre, ou d'un cycle à l'autre, le procédé de manœuvre peut comprendre, préalablement à l'étape de traite 907, une étape de contrainte 901, puis entre l'étape de traite 907 et l'étape de levage 902, une étape de relâchement 903.

Au cours de l'étape de contrainte 901, l'unité de contrôle 800 commande chaque deuxième moyen d'entraînement 110a-b de manière à faire basculer chaque bras basculant 108a-b de sa position abaissée à une position intermédiaire entre la position abaissée et la position relevée. Cette étape de contrainte 901 permet de basculer légèrement chaque guide latéral 122 vers l'arrière ce qui repousse chaque vache 1 vers l'arrière de la stalle de contention 114.

La position intermédiaire peut être déterminée par l'exploitant en appuyant sur un bouton de commande dédié, ou par des capteurs mesurant par exemple la position de chaque vache 1 par rapport à l'arrière de la stalle de contention 114.

Au cours de l'étape de relâchement 903, l'unité de contrôle 800 commande chaque deuxième moyen d'entraînement 110a-b de manière à faire basculer chaque bras basculant 108a-b de sa position intermédiaire à sa position abaissée. Cette étape de relâchement 903 permet de basculer légèrement chaque guide latéral 122 vers l'avant pour relâcher la pression qui repousse chaque vache 1 vers l'arrière de la stalle de contention 114.

La traite s'effectue alors entre l'étape de contrainte 901 et l'étape de relâchement 903.

Il est également possible de prévoir que la traite s'effectue sur le côté et à l'arrière de chaque vache 1. L'axe de chaque stalle de contention 114 présente alors un angle par rapport à la direction d'alignement.

## Revendications

1. Installation de traite (100) pour animaux (1) comportant :
- une pluralité de poteaux (102a-c) plantés verticalement dans le sol (10) et où entre deux poteaux (102a-c) voisins est agencée une pluralité de stalles de contention (114), chacune présentant un axe aligné avec l'axe longitudinal de l'animal (1) lorsqu'il est dans la stalle de contention (114),
- pour chaque poteau (102a-c), un coulisseau (104a-c) monté mobile en translation verticalement le long du poteau (102a-c) entre une position basse et une position haute, et un premier moyen d'entraînement (106a-b) prévu pour assurer le déplacement du coulisseau (104a-c),
- pour chaque coulisseau (104a-c), un bras basculant (108a-b) monté mobile en rotation sur le coulisseau (104a-c) entre une position abaissée et une position relevée, et un deuxième moyen d'entraînement (110a-b) prévu pour assurer le déplacement du bras basculant (108a-b),
- pour chaque paire de bras basculants (108a-b) voisins, une poutre (112a-b) fixée aux deux bras basculants (108a-b),
- sous chaque poutre (112a-b), une pluralité de poutrelles (118) fixées et suspendues sous la poutre (112a-b),
- pour chaque poutrelle (118), un guide latéral (122) porté par la poutrelle (118) et positionné entre deux animaux (1) voisins pour séparer leurs têtes, et
- une unité de contrôle (800) prévue pour commander chaque moyen d'entraînement (106a-b, 110a-b).

2. Installation de traite (100) selon la revendication 1, **caractérisée en ce qu'**elle comporte, pour chaque poutrelle (118), un portillon de séparation (116) monté mobile en rotation sur la poutrelle (118) entre une position de fermeture dans laquelle le portillon de séparation (116) est en travers de la stalle de contention (114) et une position de séparation dans laquelle le portillon de séparation (116) se positionne parallèlement à l'axe des stalles de contention (114).

3. Installation de traite (100) selon l'une des revendications 1 ou 2, **caractérisée en ce qu'**elle comporte pour chaque poteau (102a-c), une potence (126) fixée audit poteau (102a-c) et s'étendant vers l'arrière des stalles de contention (114), et un pare-bouse (124) fixé à chaque potence (126) au niveau de l'arrière des stalles de contention (114).

4. Procédé de manœuvre pour une installation de traite (100) selon l'une des revendications 1 à 3 et comportant :
- une étape de traite (907) au cours de laquelle les animaux (1) sont traits,
- une étape de levage (902) au cours de laquelle l'unité de contrôle (800) commande chaque premier moyen d'entraînement (106a-b) de manière à faire passer chaque coulisseau (104a-c) de sa position basse à sa position haute,
- une première étape de basculement (904) au cours de laquelle l'unité de contrôle (800) commande chaque deuxième moyen d'entraînement (110a-b) de manière à faire basculer chaque bras basculant (108a-b) de sa position abaissée à sa position relevée,
- une étape de descente (906) au cours de laquelle l'unité de contrôle (800) commande chaque premier moyen d'entraînement (106a-b) de manière à faire passer chaque coulisseau (104a-c) de sa position haute à sa position basse,
- une deuxième étape de basculement (908) au cours de laquelle l'unité de contrôle (800) commande chaque deuxième moyen d'entraînement (110a-b) de manière à faire basculer chaque bras basculant (108a-b) de sa position relevée à sa position abaissée.

5. Procédé de manœuvre selon la revendication 4, **caractérisé en ce qu'**il comporte préalablement à l'étape de traite (907), une étape de contrainte (901) au cours de laquelle, l'unité de contrôle (800) commande chaque deuxième moyen d'entraînement (110a-b) de manière à faire basculer chaque bras basculant (108a-b) de sa position abaissée à une position intermédiaire entre la position abaissée et la position relevée, et entre l'étape de traite (907) et l'étape de levage (902), une étape de relâchement (903) au cours de laquelle, l'unité de contrôle (800) commande chaque deuxième moyen d'entraînement (110a-b) de manière à faire basculer chaque bras basculant (108a-b) de sa position intermédiaire à sa position abaissée.

## Patentansprüche

1. Melkanlage (100) für Tiere (1), die Folgendes aufweist:
- eine Vielzahl von Pfosten (102a-c), die vertikal in den Boden (10) gesetzt sind, und wobei zwischen zwei benachbarten Pfosten (102a-c) eine Vielzahl von Haltebuchten (114) angeordnet ist, deren Achse jeweils mit der Längsachse des Tieres (1) ausgerichtet ist, wenn es sich in der Haltebucht (114) befindet,
- für jeden Pfosten (102a-c) einen Schlitten (104a-c), der entlang des Pfostens (102a-c) zwischen einer niedrigen Position und einer hohen Position vertikal verschiebbar montiert ist, und ein erstes Antriebsmittel (106a-b), das zum Bewegen des Schlittens (104a-c) vorgesehen ist,
- für jeden Schlitten (104a-c) einen Kipparm (108a-b), der auf dem Schlitten (104a-c) zwischen einer abgesenkten Position und einer angehobenen Position drehbar montiert ist, und ein zweites Antriebsmittel (110a-b), das zum Bewegen des Kipparms (108a-b) vorgesehen ist,
- für jedes Paar benachbarter Kipparme (108a-b) einen Balken (112a-b), der an den beiden Kipparmen (108a-b) befestigt ist,
- unter jedem Balken (112a-b) eine Vielzahl von Trägern (118), die unter dem Balken (112a-b) befestigt und aufgehängt sind,
- für jeden Träger (118) eine seitliche Führung (122), die von dem Träger (118) getragen wird und zwischen zwei benachbarten Tieren (1) positioniert ist, um deren Köpfe zu trennen, und
- eine Steuereinheit (800), die zum Steuern jedes Antriebsmittels (106a-b, 110a-b) vorgesehen ist.

2. Melkanlage (100) nach Anspruch 1, **dadurch gekennzeichnet, dass** sie für jeden Träger (118) ein Trenngatter (116) aufweist, das zwischen einer geschlossenen Position, in der sich das Trenngatter (116) quer zur Haltebucht (114) befindet, und einer Trennposition, in der sich das Trenngatter (116) parallel zur Achse der Haltebuchten (114) befindet, drehbar an dem Träger (118) montiert ist.

3. Melkanlage (100) nach einem der Ansprüche 1 oder 2, **dadurch gekennzeichnet, dass** sie für jeden Pfosten (102a-c) einen Ausleger (126) aufweist, der an dem Pfosten (102a-c) befestigt ist und sich zur Rückseite der Haltebuchten (114) hin erstreckt, und einen Mistschutz (124), der an jedem Ausleger (126) an der Rückseite der Haltebuchten (114) befestigt ist.

4. Betriebsverfahren für eine Melkanlage (100) nach einem der Ansprüche 1 bis 3, das Folgendes aufweist:
- einen Melkschritt (907), in dem die Tiere (1) gemolken werden,
- einen Anhebeschritt (902), in dem die Steuereinheit (800) jedes erste Antriebsmittel (106a-b) so steuert, dass jeder Schlitten (104a-c) aus seiner niedrigen Position in seine hohe Position bewegt wird,
- einen ersten Kippschritt (904), in dem die Steuereinheit (800) jedes zweite Antriebsmittel (110a-b) so steuert, dass jeder Kipparm (108a-b) aus seiner abgesenkten Position in seine angehobene Position gekippt wird,
- einen Absenkschritt (906), in dem die Steuereinheit (800) jedes erste Antriebsmittel (106a-b) so steuert, dass jeder Schlitten (104a-c) aus seiner hohen Position in seine niedrige Position bewegt wird,
- einen zweiten Kippschritt (908), in dem die Steuereinheit (800) jedes zweite Antriebsmittel (110a-b) so steuert, dass jeder Kipparm (108a-b) aus seiner angehobenen Position in seine abgesenkte Position gekippt wird.

5. Betriebsverfahren nach Anspruch 4, **dadurch gekennzeichnet, dass** es vor dem Melkschritt (907) einen Einschränkungsschritt (901) aufweist, in dem die Steuereinheit (800) jedes zweite Antriebsmittel (110a-b) so steuert, dass jeder Kipparm (108a-b) aus seiner abgesenkten Position in eine Zwischenposition zwischen der abgesenkten Position und der angehobenen Position gekippt wird, und zwischen dem Melkschritt (907) und dem Anhebeschritt (902) einen Freigabeschritt (903) aufweist, in dem die Steuereinheit (800) jedes zweite Antriebsmittel (110a-b) so steuert, dass jeder Kipparm (108a-b) aus seiner Zwischenposition in seine abgesenkte Position gekippt wird.

## Claims

1. Milking installation (100) for animals (1), comprising:
- a plurality of posts (102a-c) planted vertically in the floor (10) and in which between two adjacent posts (102a-c) there is arranged a plurality of containment stalls (114), each one having an axis aligned with the longitudinal axis of the animal (1) when it is in the containment stall (114),
- for each post (102a-c) a slider (104a-c) mounted with the ability to move in vertical translation along the post (102a-c) between a low position and a high position, and a first drive means (106a-b) designed to move the slider (104a-c),
- for each slider (104a-c), a tilting arm (108a-b) mounted with the ability to rotate on the slider (104a-c) between a lowered position and a raised position, and a second drive means (110a-b) designed to move the tilting arm (108a-b),
- for each pair of adjacent tilting arms (108a-b), a beam (112a-b) fixed to the two tilting arms (108a-b),
- beneath each beam (112a-b) a plurality of girders (118) fixed and suspended beneath the beam (112a-b),
- for each girder (118), a lateral guide (122) borne by the girder (118) and positioned between two adjacent animals (1) in order to separate their heads, and
- a control unit (800) intended to control each drive means (106a-b, 110a-b).

2. Milking installation (100) according to Claim 1, **characterized in that** it comprises, for each girder (118), a dividing gate (116) mounted with the ability to rotate on the girder (118) between a closed position in which the dividing gate (116) lies across the containment stall (114) and a dividing position in which the dividing gate (116) is positioned parallel to the axis of the containment stalls (114).

3. Milking installation (100) according to one of Claims 1 and 2, **characterized in that** it comprises, for each post (102a-c) a bracket (126) fixed to said post (102a-c) and extending towards the rear of the containment stalls (114), and a dung shield (124) fixed to each bracket (126) at the level of the rear of the containment stalls (114).

4. Operating method for a milking installation (100) according to one of Claims 1 to 3 and comprising:
- a milking step (907) during which the animals (1) are milked,
- a raising step (902) during which the control unit (800) operates each first drive means (106a-b) in such a way as to cause each slider (104a-c) to move from its low position to its high position,
- a first tilt step (904) during which the control unit (800) operates each second drive means (110a-b) in such a way as to cause each tilting arm (108a-b) to tilt from its lowered position to its raised position,
- a lowering step (906) during which the control unit (800) operates each first drive means (106a-b) in such a way as to cause each slider (104a-c) to move from its high position to its low position,
- a second tilt step (908) during which the control unit (800) operates each second drive means (110a-b) in such a way as to cause each tilting arm (108a-b) to tilt from its raised position to its lowered position.

5. Operating method according to Claim 4, **characterized in that** it comprises, prior to the milking step (907), a restrain step (901) during which the control unit (800) operates each second drive means (110a-b) in such a way as to cause each tilting arm (108a-b) to tilt from its lowered position into an intermediate position between the lowered position and the raised position, and, between the milking step (907) and the raising step (902), a release step (903) during which the control unit (800) operates each second drive means (110a-b) in such a way as to cause each tilting arm (108a-b) to tilt from its intermediate position into its lowered position.
